Europäisches Patentamt

European Patent Office

Office européen des brevets

(19)

(11) Veröffentlichungsnummer: **0 218 878**
**B1**

(12)    # EUROPÄISCHE PATENTSCHRIFT

(45) Veröffentlichungstag der Patentschrift:
13.12.89

(21) Anmeldenummer: 86112078.0

(22) Anmeldetag: 01.09.86

(51) Int. Cl.⁴: **B 25 J   5/02**

(54) Portalanordnung für einen Industrieroboter.

(30) Priorität: 12.09.85 DE 3532588

(43) Veröffentlichungstag der Anmeldung:
22.04.87 Patentblatt 87/17

(45) Bekanntmachung des Hinweises auf die Patenterteilung: 13.12.89 Patentblatt 89/50

(84) Benannte Vertragsstaaten:
DE FR IT SE

(56) Entgegenhaltungen:
EP–A– 0 004 853
CH–A–    335 237
DE–B– 1 184 049
GB–A– 2 098 577
US–A– 2 679 940

(73) Patentinhaber: Siemens Aktiengesellschaft
Wittelsbacherplatz 2
D-8000 München 2 (DE)

(72) Erfinder: Keppler, Rainer
Jahnstrasse 48
D-8521 Poxdorf (DE)

**Beschreibung**

Die Erfindung bezieht sich auf eine Portalanordnung für einen Industrieroboter, mit einem Portalträger und einem mit Rollen seitlich abgestütztem Portallaufwagen. Es ist bereits bekannt, die Laufwagen auf einem Träger mit Rollen zu führen und seitlich am Träger über Rollen abzustützen (vgl. DE-B- 11 84 049). Von einer derartigen Konstruktion wird bei der vorliegenden Erfindung ausgegangen.

Portalgeräte bei Industrierobotern sind in den verschiedenartigsten Ausführungsformen bekannt (vergl. zum Beispiel Zeitschrift « Werkstatt und Betrieb » 1976, Heft 6, Seite 305 oder 315). Im Regelfall hängt an einer üblichen Portalkonstruktion ein Laufwagen, der den Roboter trägt. Durch das Verfahren des Laufwagens und gegebenenfalls des Portals selbst, kann ein relativ großer Arbeitsbereich überstrichen werden.

Vorteilhafterweise werden die Portalkonstruktionen wie auch andere Konstruktionen so ausgeführt, daß sie je nach Bedürfnis baukastenartig zu den gewünschten Abmessungen zusammengesetzt werden können.

Handelt es sich um sehr lange Portale, so macht eine sichere spielfreie Lagerung des Laufwagens gewisse Schwierigkeiten.

Die Aufgabe der vorliegenden Erfindung besteht darin, eine Portalanordnung der eingangs genannten Art so auszubilden, daß auch bei größeren Portallängen eine einwandfreie Führung des Laufwagens erreichbar ist.

Diese Aufgabe wird erfindungsgemäß durch folgende Merkmale gelöst :

Der Portalträger weist eine an der Seite angeordnete Rundführung in Form einer Stahlwelle und an der Unter- oder Oberseite eine Flachführung in Form eines Flachstahlbandes auf und der Laufwagen ist mit vorgespannten Kugelführungsbuchsen auf der Stahlwelle geführt und mit den Rollen am Flachstahlband abgestützt.

Dieses vorgenannte Führungssystem mit einer Rund- und Flachführung sichert auch bei großen Temperaturunterschieden einen absolut verklemmungsfreien Lauf der Linearachse der Roboteranordnung, d. h. der Bewegung des Laufwagens auf dem Portalträger. Der Portalträger besteht vorzugsweise aus einem quadratischen Hohlprofil mit aufgeschweißten Trägerleisten zur Aufnahme der Führungsbahnen. Werden die aufgeschweißten Trägerleisten in Einbaulage des Trägers bearbeitet, so werden hohe Genauigkeiten bezüglich Form und Lageabweichung erzielt, da sich dann im Betrieb die Eigendurchbiegung des Trägers auf das Führungssystem nicht mehr auswirken kann.

Antrieb und Energieversorgung des Laufwagens können in an sich bekannter Weise vorgenommen werden, zum Beispiel wird vorteilhafterweise eine Schleppkettenanordnung auf dem Hohlträger vorgesehen.

Anhand eines in der Zeichnung dargestellten Ausführungsbeispiels sei die Erfindung näher erläutert ; es zeigen :

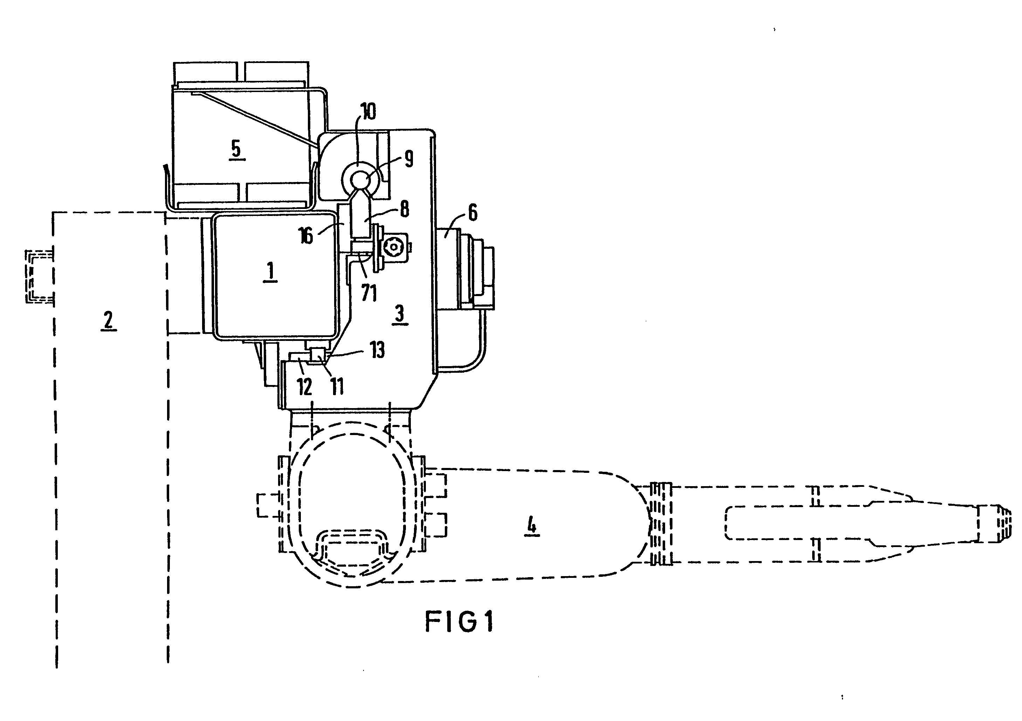

Figur 1 einen Querschnitt durch die Portalanordnung und

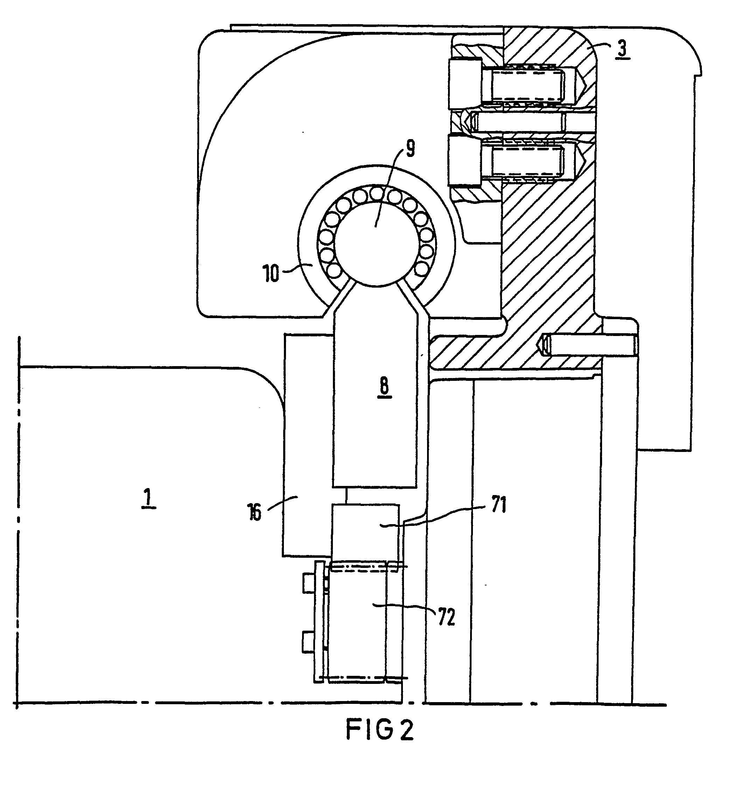

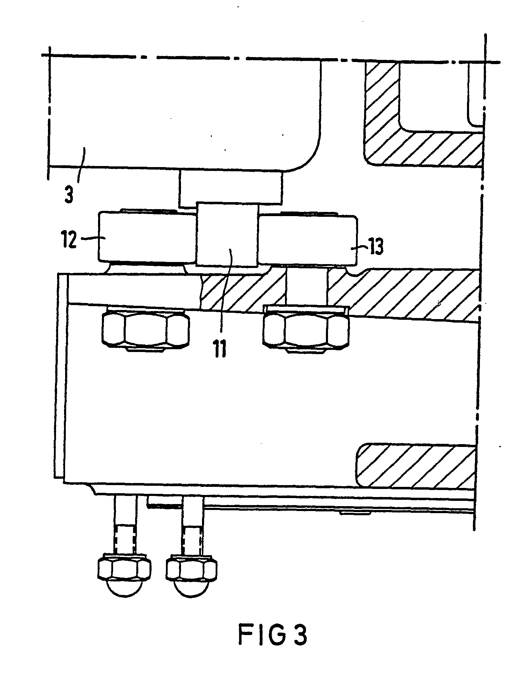

Figuren 2 und 3 vergrößerte Ausschnitte von Rund- und Flachführung des Laufwagens.

Wie ersichtlich, besteht der Portalträger 1 aus einem quadratischen Hohlprofil. Der Träger läuft senkrecht zur Zeichenebene. An der Unterseite ist eine sich in Trägerlängsrichtung erstreckende Trägerleiste 15 aufgeschweißt, auf der eine Flachführung in Form eines Flachstahlbandes 11 aus Stahl angeordnet ist.

An der Seite des Trägers 1 ist eine sich ebenfalls in Längsrichtung erstreckende Trägerleiste 16 vorgesehen, auf der in Abstand Wellenunterstützungen 8 mit hohem Widerstandsmoment befestigt sind. Auf den Wellenunterstützungen ruht eine Präzisionsstahlwelle 9, die als Rundführung dient. Diese Welle 9 erstreckt sich ebenfalls in Portallängsrichtung.

Der Laufwagen 3, der den eigentlichen Roboter 4 trägt, ist auf der Stahlwelle 9 durch vorgespannte Kugelführungsbuchsen 10 hoher Steifigkeit und mit umlaufendem Kugelführungssystem geführt. Ferner ist der Laufwagen an der Unterseite über vier Kurvenrollen, von denen nur die zwei Rollen 12 and 13 gezeigt sind, an der Flachführung seitlich abgestützt. Die Rollen können über Exzenter anstellbar montiert sein.

Durch die Flach- und Rundführung ist eine absolut spielfreie, mit geringen Reibungsverlusten behaftete Führung des Laufwagens 3 sichergestellt.

Der Laufwagen 3 selbst besteht zum Beispiel aus einem Aluminiumgußteil hoher Steifigkeit und Präzision. Die erforderlichen Anflanschflächen für das Führungssystem und den Antrieb mit Roboter können ebenfalls in einer Aufspannung auf einer Werkzeugmaschine hergestellt sein.

Zum Antrieb des Laufwagens 3 ist ein Motor 6 vorgesehen, der über ein Zahnriemengetriebe ein Ritzel 72 antreibt, welches in eine am Träger 1 befestigte Zahnstange 71 eingreift. Verwendet man schrägverzahnte Zahnstangen und ein axial geteiltes Zahnrad, dessen Teile gegeneinander verspannt sind, als Ritzel, so erhält man eine große Laufruhe der Anordnung ohne Spiel.

Die Energiezuführung zum Laufwagen 3 wird mit einer Energiezuführungskette vorgenommen, die auf dem Träger 1 in einer U-förmigen Wanne 5 untergebracht ist.

Der Träger 1 selbst kann, wie gestrichelt angedeutet, seitlich an Stützen 2 aufgehängt sein.

Wie ersichtlich, ist der Aufbau des Führungs- und Antriebssystems in Träger-Längsrichtung so ausgeführt, daß beliebig viele Einzelträger mit entsprechender Abstützung aneinandergesetzt werden können, so daß die Verfahrlänge des Portalroboters beliebig erweitert werden kann.

Die Rundführung des nachfolgenden Trägers wird in der Rundführung des vorhergehenden Trägers zentriert. Die Flachführungen stoßen stumpf ohne Stoßübergang aneinander. Die Zahnstange ist auf den nachfolgenden Träger übergreifend montiert.

## Patentansprüche

1. Portalanordnung für einen Industrieroboter, mit einem Portalträger und einem mit Rollen seitlich abgestütztem Portallaufwagen, gekennzeichnet durch folgende Merkmale :

a) der Portalträger (1) weist eine an der Seite angeordnete Rundführung in Form einer Stahlwelle (9) und an der Unter- oder Oberseite eine Flachführung in Form eines Flachstahlbandes (11) auf und

b) der Laufwagen (3) ist mit Kugelführungsbuchsen auf der Stahlwelle geführt und mit den Rollen (12, 13) am Flachstahlband (11) abgestützt.

2. Portalanordnung nach Anspruch 1, dadurch gekennzeichnet, daß der Portalträger (1) als Hohlprofilträger ausgebildet und mit aufgeschweißten Trägerleisten (15, 16) zur Aufnahme von Rund- und Flachführung (9, 11) versehen ist.

3. Portalanordnung nach Anspruch 1, dadurch gekennzeichnet, daß am Profilträger (1) eine Zahnstange (71) angeordnet ist, in die ein geteiltes und vorgespanntes Ritzel (72) des am Portallaufwagen (3) angeordneten Antriebes (6) eingreift.

4. Portalanordnung nach Anspruch 1, dadurch gekennzeichnet, daß auf dem Profilträger eine Wanne (5) angeordnet ist, in der eine Energiezuführungskette zum Laufwagen liegt.

5. Verfahren zur Herstellung eines Portalträgers (1) nach den Ansprüchen 1 und 2, dadurch gekennzeichnet, daß die aufgeschweißten Trägerleisten (15, 16) in Einbaulage des Trägers (1) für die Aufnahme von Rund- und Flachführung (9, 11) bearbeitet werden.

## Claims

1. A portal arrangement for an industrial robot, comprising a portal carrier and a portal carriage supported laterally by means of rollers, characterised by the following features :

a) the portal carrier (1) comprises a circular guide arranged laterally in the form of a steel shaft (9) and a flat guide on the top or bottom in the form of a flat steel strip (11) and

b) the carriage (3) is guided on the steel shaft by means of ballbearing sleeves and is supported on the flat steel strip (11) by means of the rollers (12, 13).

2. A portal arrangement according to claim 1, characterised in that the portal carrier (1) is designed as a hollow profile carrier and is provided with welded-on support bars (15, 16) for receiving circular and flat guides (9, 11).

3. A portal arrangement according to claim 1, characterised in that a rack (71) is arranged on the profile carrier (1), in which rack a divided and prestressed pinion (72) of the drive (6) arranged on the portal carriage (3) engages.

4. A portal arrangement according to claim 1, characterised in that a trough (5), in which an energy supply chain to the carriage is disposed, is arranged on the profile carriage.

5. A method of manufacturing a portal carrier (1) according to claims 1 and 2, characterised in that the welded-on support bars (15, 16) are machined in the fitted position of the carrier (1) for receiving the circular and flat guides (9, 11).

## Revendications

1. Dispositif à portique pour un robot industriel, avec un support de portique et un chariot de portique soutenu latéralement par des galets, caractérisé par les particularités suivantes :

a) le support de portique (1) comporte un guidage circulaire disposé latéralement et se présentant sous la forme d'un arbre en acier (9), et sur le côté inférieur ou supérieur un guidage plan se présentant sous la forme d'une bande d'acier plane (11), et

b) le chariot (3) est guidé sur l'arbre en acier et prend appui sur la bande d'acier plane (11) par des galets (12, 13).

2. Dispositif à portique selon la revendication 1, caractérisé par le fait que le support de portique (1) est réalisé sous la forme d'un support profilé creux et est pourvu de barres de support soudées (15, 16) servant à recevoir le guidage circulaire et plan (9, 11).

3. Dispositif selon la revendication 1, caractérisé par le fait que sur le support profilé (1) est disposée une crémaillère avec laquelle engrène un pignon subdivisé et précontraint (72) appartenant à un mécanisme d'entraînement disposé sur le chariot de portique (3).

4. Dispositif selon la revendication 1, caractérisé par le fait que sur le support profilé est disposée une cuvette (5) dans laquelle se situe une chaîne d'alimentation en énergie menant au chariot 5. Procédé pour la fabrication d'un support de portique (1) selon les revendications 1 et 2, caractérisé par le fait que les barres de support soudées (15, 16) sont usinées, dans la position de montage du support (1) pour recevoir le guidage circulaire et plan (9, 11).

5. Procédé pour la fabrication d'un support de portique (1) selon les revendications 1 et 2, caractérisé par le fait que les barres de support soudées (15, 16) sont usinées, dans la position de montage du support (1) pour recevoir le guidage circulaire et plan (9, 11).

FIG1

FIG 2

FIG 3